# EUROPÄISCHE PATENTSCHRIFT

(11) **EP 1 364 133 B1**
(45) Veröffentlichungstag und Bekanntmachung des Hinweises auf die Patenterteilung: **25.07.2012**
(21) Anmeldenummer: 01273820.9
(22) Anmeldetag: 01.12.2001
(51) Int. Cl.: F16D 13/72

(54) **VOLLGEFÜLLTE NASSLAUFKUPPLUNG MIT HYDRODYNAMISCHER KÜHLUNG**
FULLY FILLED WET CLUTCH WITH HYDRODYNAMIC COOLING
EMBRAYAGE A BAIN D'HUILE COMPLETEMENT REMPLI, A REFROIDISSEMENT HYDRODYNAMIQUE

(30) Priorität: 28.02.2001 DE 10109497
(43) Veröffentlichungstag der Anmeldung: 26.11.2003
(73) Patentinhaber: ZF Friedrichshafen AG, 80846 Friedrichshafen (DE)
(72) Erfinder: SASSE, Christoph, 97422 Schweinfurt (DE)
(86) Internationale Anmeldenummer: PCT/EP2001/014061
(87) Internationale Veröffentlichungsnummer: WO 2002/068837

(56) Entgegenhaltungen:
- FR-A- 2 792 692
- US-A- 1 742 804
- US-A- 3 695 407
- US-A- 4 560 048

## Beschreibung

### [Technisches Gebiet]

Die vorliegende Erfindung betrifft eine Kupplungsanordnung, insbesondere für ein Kraftfahrzeug.

### [Stand der Technik]

Die DE 199 17 893 A1 und die US-A-6,142,280 offenbaren sogenannte nasslaufende Kupplungsanordnungen, bei welchen verschiedene Reibflächenanordnungen in einem Fluid gefüllten Arbeitsraum enthalten sind und durch einen Kupplungskolben in gegenseitige Reibanlage bringbar sind, um eine Drehmomentübertragungsverbindung zwischen einer Gehäuseanordnung, die im Allgemeinen an ein Antriebsaggregat angekoppelt ist, und einer Abtriebswelle, also beispielsweise einer Getriebeeingangswelle, herzustellen. Derartige nasslaufende Kupplungsanordnungen finden besonders Einsatz in sehr stark belasteten Bereichen, da sie durch die Zufuhr bzw. Abfuhr von Fluid die im Bereich der Reibflächenanordnungen insbesondere im Schlupfbetrieb, also beispielsweise beim Anfahren, erzeugte Reibwärme abführen können. Vor allem beim Anfahren mit starkem Schlupf in der Kupplung, also beispielsweise beim Anfahren am Berg, sind jedoch auch derartige nasslaufende Kupplungen oftmals nicht mehr in der Lage, die im Bereich der reibend aneinander anliegenden Reibflächenanordnungen erzeugte Wärme ausreichend abzuführen, so dass zumindest in lokalen Bereichen eine thermische Überlastung auftreten kann. Dieses Problem wird vor allem auch daher zunehmend größer, da in modernen Kraftfahrzeugen immer mehr Antriebsaggregate, beispielsweise Turbodieselaggregate mit Common-Rail-System, zum Einsatz kommen, die bereits bei geringer Drehzahl ein sehr großes Drehmoment abgeben können, welches beim Einrücken einer Kupplung zunächst vollständig in Reibarbeit und somit Wärme umgewandelt wird.

Aus der US 3,695,407 A ist eine weitere nasslaufende Kupplungsanordnung bekannt, bei welcher verschiedene Reibflächenanordnungen in einem von Fluid durchströmten Arbeitsraum enthalten sind und durch einen als Membran ausgebildeten Kupplungskolben in gegenseitige Reibanlage bringbar sind, um eine Drehmomentübertragungsverbindung zwischen einer Antriebswelle und einer Abtriebswelle herzustellen. Innerhalb der feststehenden Gehäuseanordnung der Kupplungsanordnung ist eine Pumpe angeordnet, durch welche frisches Fluid in einen radial inneren Bereich der Gehäuseanordnung gefördert wird. Von dort aus dringt das Fluid fliehkraftbedingt über Nutungen in den Reibflächenanordnungen nach radial außen, um dort über einen Fluidausgang die Gehäuseanordnung zu verlassen, und über einen Zwischenkühler erneut der Pumpe zugeführt zu werden. Auf diese Weise wird das Fluid lediglich einmal durch den Erstreckungsbereich der Reibflächenanordnung geleitet, so dass zum einen die Reibflächenanordnung unzureichend gekühlt wird, und zum anderen die Wärmeaufnahmefähigkeit des Fluids nur in begrenztem Umfang genutzt wird, so dass aufgrund der hohen Nutzung von Pumpe und Zwischenkühler eine ungünstige Energiebilanz entsteht.

Der gleiche Nachteil ergibt sich bei einer aus der US 4,560,048 A bekannten Kupplungsanordnung, bei welcher eine Reibflächenanordnung axial zwischen einer einer Brennkraftmaschine zugeordneten Schwungmasse und einer Anpressplatte vorgesehen ist, wobei die Anpressplatte in einem mit dieser Schwungmasse verbundenen Kupplungsgehäuse angeordnet ist. Während die antriebsseitigen Elemente der Reibflächenanordnung mit Schwungmasse und Antriebsplatte drehbar sind, stehen die abtriebsseitigen Elemente der Reibflächenanördnung mit einer als Abtrieb wirksamen Getriebeeingangswelle in Drehverbindung. Zur Kühlung der Reibflächenanordnung ist Fluid vorgesehen, welches, veranlasst durch eine außerhalb von Schwungmasse und Kupplungsgehäuse vorgesehenen Pumpe, im Radialbereich der Getriebeeingangswelle zugeführt wird, um über Leitkanäle innerhalb der Anpressplatte und Durchgänge in Elementen der Reibflächenanordnung sowie Nutungen in den Reibbereichen der Reibflächenanordnung zu einem Fluidsumpf zu gelangen, der sich radial außerhalb der Reibflächenanordnung befindet, und aus welchem Fluid über die Pumpe aus der Kupplungsanordnung herausgezogen wird, um nach Durchgang durch einen Zwischenkühler der Kupplungsanordnung erneut zugeführt zu werden. Schließlich sei noch auf die US 1,742,804 A verwiesen, bei welcher einer Reibflächenanordnung eine Luftkühlung zugeordnet ist. Dies mag bei geringer Aufheitzung der Reibflächenanordnung hinreichend sein, genügt allerdings bei stärkerem Schlupf zwischen den Elementen der Reibflächenanordnung regelmäßig nicht.

### [Aufgabe der Erfindung]

Es ist die Aufgabe der vorliegenden Erfindung, eine nasslaufende Kupplungsanordnung, insbesondere für ein Kraftfahrzeug, bereitzustellen, bei welcher auch bei starker Belastung die Gefahr einer zumindest lokalen Überhitzung weitestgehend ausgeschlossen werden kann.

### [Darstellung der Erfindung]

Erfindungsgemäß wird diese Aufgabe gelöst durch eine Kupplungsanordnung, insbesondere für ein Kraftfahrzeug, umfassend: eine mit Fluid gefüllte oder füllbare Gehäuseanordnung, in der Gehäuseanordnung eine erste Reibflächenanordnung und eine zweite Reibflächenanordnung, welche zur Herstellung einer Reibwechselwirkung in Anlage aneinander bringbar sind, wobei in der Gehäuseanordnung eine Fluidströmung zur Kühlung der Reibflächenanordnungen erzeugbar ist.

Diese Kupplungsanordnung ist gekennzeichnet durch eine in der Gehäuseanordnung vorgesehene Fluidzirkulationsanordnung zur Erzeugung einer die erste Reibflächenanordnung und die zweite Reibflächenanordnung wenigstens bereichsweise umströmenden Fluidzirkulation.

Während bei den aus dem Stand der Technik bekannten nasslaufenden Kupplungsanordnungen die Wärmeabfuhr über das die Reibflächenanordnungen umströmende Fluid derart erfolgt, dass eine Fluidaustauschströmung aufgebaut wird, durch welche in den Innenraum der Gehäuseanordnung permanent Fluid eingeleitet bzw. erwärmtes Fluid abgeführt wird, wird gemäß den Prinzipien der vorliegenden Erfindung in der Gehäuseanordnung eine Fluidzirkulation aufgebaut, die nicht notwendigerweise gleichzeitig auch eine Fluidaustauschströmung erfordert. Das in der Gehäuseanordnung in der Zirkulation zirkulierende Fluid umströmt die Reibflächenanordnungen und kann somit zu einer deutlich besseren Wärmeabfuhr beitragen. Dabei macht die vorliegende Erfindung besonders davon Nutzen, dass derartige Fluide eine vergleichsweise große Wärmespeicherkapazität haben, die nach dem einmaligen Vorbeiströmen des Fluids an den Reibflächenanordnungen bei weitem noch nicht erschöpft ist. Vielmehr umströmt bei der gemäß den Prinzipien der vorliegenden Erfindung aufgebauten Kupplungsanordnung das Fluid die Reibflächenanordnungen wiederholt bzw. mehrfach, bevor es im Rahmen des ggf. parallel vorhandenen Fluidaustausches wieder aus der Gehäuseanordnung abgezogen wird. Es kann dabei also bei Einsatz einer vergleichsweise schwach dimensionierten Pumpe, durch welche das Fluid in die Gehäuseanordnung eingespeist bzw. aus dieser abgezogen wird, eine deutlich verbesserte Abfuhr der Wärmeenergie aus den Reibflächenanordnungen durch mehrfaches Umströmen derselben mit ein und demselben Fluid vor dem Austauschen desselben erhalten werden. Bei der erfindungsgemäß aufgebauten Zirkulation innerhalb der Gehäuseanordnung kann selbstverständlich eine permanente Vermischung des zirkulierenden Fluids mit neu in die Gehäuseanordnung eingeleitetem und somit noch kälterem Fluid stattfinden.

Die erste Reibflächenanordnung ist hierbei mit der Gehäuseanordnung zur gemeinsamen Drehung gekoppelt, die zweite Reibflächenanordnung dagegen mit einem Abtriebsorgan. Die Fluidzirkulationsanordnung weist ein mit der Gehäuseanordnung drehbares erstes Förderorgan sowie ein mit dem Abtriebsorgan drehbares zweites Förderorgan auf. Es kann bei der erfindungsgemäßen Kupplungsanordnung vorgesehen sein, dass das erste Förderorgan ein Pumpenrad einer Fluidkupplungsanordnung bildet und dass das zweite Förderorgan ein Turbinenrad einer Fluidkupplungsanordnung bildet.

Es ist möglich, dass das erste Förderorgan als eine Drehachse umgebendes ringartiges erstes Schaufelrad ausgebildet ist und dass das zweite Förderorgan als die Drehachse umgebendes ringartiges zweites Schaufelrad ausgebildet ist. Dabei kann jedes der Schaufelräder eine eine Mehrzahl von in Umfangsrichtung aufeinander folgenden Förderschaufeln tragende, zum jeweils anderen Schaufelrad offene Schaufelradschale umfassen. Hier kann letztendlich ein Aufbau vorgesehen sein, der hinsichtlich des Fluidzirkulationsprinzips einer sogenannten Fluidkupplung entspricht bei welcher zwischen dem ersten Förderorgan, also beispielsweise dem Pumperad, und dem zweiten Förderorgan, also beispielsweise dem Turbinenrad, eine Zirkulation aufgebaut wird, d.h. letztendlich ein eine Drehachse umgebender Zirkulationstorus erzeugt wird.

Um bei der erfindungsgemäßen Kupplungsanordnung die Baugröße so klein als möglich halten zu können bzw. auch die durch die Fluidzirkulation eingeführte Kühlwirkung so effizient als möglich ausgestalten zu können, wird vorgeschlagen, dass das erste Schaufelrad oder/und das zweite Schaufelrad einen radial äußeren Schaufelradbereich und einen radial inneren Schaufelradbereich aufweist und dass die erste Reibflächenanordnung und die zweite Reibflächenanordnung wenigstens teilweise in einem Bereich radial zwischen dem radial äußeren Schaufelradbereich und dem radial inneren Schaufelradbereich angeordnet sind.

Weiter kann der Aufbau der erfindungsgemäßen Kupplungsanordnung sehr einfach gehalten werden, wenn vorgesehen ist, dass jede Reibflächenanordnung wenigstens ein Reiborgan aufweist und dass das wenigstens eine Reiborgan der ersten Reibflächenanordnung vermittels des ersten Förderorgans mit der Gehäuseanordnung zur gemeinsamen Drehung gekoppelt ist oder/und dass das wenigstens eine Reiborgan der zweiten Reibflächenanordnung vermittels des zweiten Förderorgans mit dem Abtriebsorgan zur gemeinsamen Drehung gekoppelt ist. Hier kann beispielsweise vorgesehen sein, dass das wenigstens eine Reiborgan der ersten Reibflächenanordnung oder/und dass wenigstens eine Reiborgan der zweiten Reibflächenanordnung mit wenigstens einem Teil der Förderschaufeln des ersten Förderorgans bzw. des zweiten Förderorgans zur gemeinsamen Drehung gekoppelt ist.

Die vorliegende Erfindung wird nachfolgend mit Bezug auf die beiliegenden Zeichnungen anhand bevorzugter Ausgestaltungsformen detailliert beschrieben. Es zeigt:
- Fig. 1: eine Teil-Längsschnittansicht einer erfindungsgemäßen Kupplungsanordnung gemäß einer ersten Ausgestaltungsform;

- Fig. 2: eine der Fig. 1 entsprechende Ansicht einer zweiten erfindungsgemäßen Ausgestaltungsform.

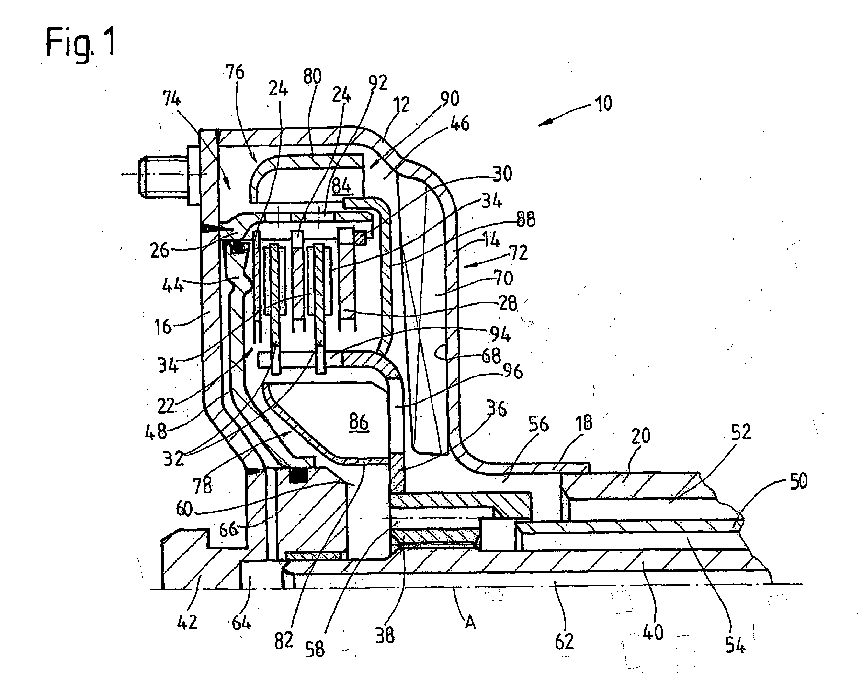

In Fig. 1 ist eine erfindungsgemäße Kupplungsanordnung allgemein mit 10 bezeichnet. Die Kupplungsanordnung 10 umfasst eine Gehäuseanordnung mit einem topfförmigen Schalenteil 14 und einem damit radial außen verbundenen Gehäusedeckel 16. Ähnlich wie bei sogenannten hydrodynamischen Drehmomentwandlern kann diese Gehäuseanordnung 12 über eine Flexplatte oder dergleichen an eine Antriebswelle eines Abtriebsaggregats, also beispielsweise Kurbelwelle, zur gemeinsamen Drehung angekoppelt werden. In einem radial inneren Bereich weist das Schalenteil 14 einen Nabenbereich 18 auf, an welchen eine als Hohlwelle ausgebildete Pumpenantriebswelle 20 angebunden ist.

Die erfindungsgemäße Kupplungsanordnung 10 weist in der Gehäuseanordnung 12 eine Reibkupplungsanordnung 22 auf. Diese Reibungskupplungsanordnung 22 umfasst eine Mehrzahl von jeweilige Reibflächen bereitstellenden Außenlamellen 24, die über ein beispielsweise ringartig ausgebildetes Kopplungselement 26 an die Gehäuseanordnung 12 zur gemeinsamen Drehung angebunden sind, durch entsprechende Verzahnungsanordnungen jedoch bezüglich des Kopplungselements 26 und somit auch bezüglich der Gehäuseanordnung 12 in Richtung einer Drehachse A verlagerbar sind. Mit diesem Kopplungselement 26 ist ferner eine ringartige Widerlagerplatte 28 drehfest verbunden, deren Axialbewegung zumindest in einer Richtung durch einen Sicherungsring 30 verhindert ist. Ferner weist die Reibungskupplungsanordnung 22 eine Mehrzahl von Innenlamellen 32 auf. Jede der Innenlamellen 32 trägt an ihren beiden axialen Seiten jeweils einen Reibbelag 34, wobei die Reibbeläge 34 in gegenseitige Reibanlage mit einer jeweils axial gegenüber liegenden Außenlamelle bzw. auch dem Widerlagerring 28 bringbar sind. Die Innenlamellen 32 sind durch ein ringartiges Kopplungselement 36 mit einer Abtriebsnabe 38 drehfest gekoppelt, welche wiederum beispielsweise über Axialverzahnung mit einer Abtriebswelle 40, beispielsweise einer Getriebeeingangswelle, zur gemeinsamen Drehung gekoppelt oder koppelbar ist. Dabei läuft die Welle 40 koaxial zu der als Hohlwelle ausgebildeten Pumpenantriebswelle 20.

Zwischen einer Gehäusenabe 42 und dem an den Gehäusedeckel 16 angebundenen ringartigen Kopplungselement 26 erstreckt sich ein ringartig ausgebildeter Kupplungskolben 44, welcher sowohl bezüglich der Gehäusenabe 42 als auch bezüglich des Kopplungselements 26 durch einen jeweiligen Dichtungsring oder dergleichen fluiddicht abgedichtet ist. Der Kupplungskolben 44 ist bezüglich der Gehäuseanordnung 12 axial verlagerbar. Durch diesen Kupplungskolben 44 wird der Innenraum der Gehäuseanordnung 12 grundsätzlich in zwei Raumbereiche 46, 48 unterteilt. Im Raumbereich 46 liegen im Wesentlichen die Komponenten der Reibungskupplungsanordnung 22, d.h. die Außenlamellen 24 und die Innenlamellen 32 sowie die diese Lamellen 24, 32 an die Gehäuseanordnung 12 bzw. die Abtriebswelle 40 ankoppelnden Kopplungselemente 26, 36, 38.

Zwischen der Pumpenantriebswelle 20 und der Abtriebswelle 40 liegt eine weitere Hohlwelle 50, welche den zwischen der Pumpenantriebswelle 20 und der Abtriebswelle 40 vorhandenen Raumbereich in zwei ringartige Fluidströmungsraumbereiche 52, 54 unterteilt. Der Raumbereich 52 mündet über einen zwischen dem Nabenbereich 18 und der Abtriebsnabe 38 gebildeten Raumbereich 56 direkt in den ersten Raumbereich 46 in der Gehäuseanordnung 12 ein. Der Raumbereich 54 mündet über jeweilige in der Abtriebsnabe 38 gebildete Durchtrittsöffnungen 58 und einen zwischen der Gehäusenabe 42 und der Abtriebsnabe 38 bzw. dem Kopplungselement 36 gebildeten Raumbereich 60 ebenfalls in den ersten Raumbereich 46 in der Gehäuseanordnung 12 ein. Es sei darauf hingewiesen, dass beispielsweise die Hohlwelle 50 mit der Abtriebsnabe 58 drehfest und fluiddicht gekoppelt sein kann, oder aber auch durch eine Drehdichtung bezüglich der Abtriebsnabe 38 fluiddicht abgeschlossen, ansonsten jedoch mit dieser nicht notwendigerweise drehbar gehalten sein kann.

In der Abtriebswelle 40 ist eine zentrale Öffnung 62 vorgesehen, welche in einen Raumbereich 64 zwischen dem axialen Ende der Antriebswelle 40 und der Gehäusenabe 42 einmündet. Dieser Raumbereich 64 steht über wenigstens einen Fluidkanal 66 in Fluidaustauschverbindung mit dem zweiten Raumbereich 48 in der Gehäuseanordnung 12.

Während also über die beiden Raumbereiche 52, 54 von einer beispielsweise in einer Getriebeanordnung vorgesehenen Fluidpumpe, die angetrieben ist durch die Pumpenantriebswelle 20, in den Raumbereich 46 Fluid eingeleitet bzw. aus dem Raumbereich 46 Fluid abgeleitet werden kann, um eine Fluidaustauschströmung bereitzuhalten, kann unabhängig von dieser Fluidaustauschströmung über die zentrale Öffnung 62 Fluid in den zweiten Raumbereich 48 in der Gehäuseanordnung 12 eingeleitet werden, um dort den Fluiddruck bezüglich des im ersten Raumbereich 46 vorhandenen Fluiddrucks zu erhöhen. Es presst dann der Kupplungskolben 44 gegen die Lamellen 24, 32 und bringt diese in gegenseitige Reibanlage. Es wird auf diese Art und Weise ein Drehmomentübertragungsweg von der Gehäuseanordnung 12 zur Abtriebswelle 40 hergestellt.

Um bei Herstellung dieser Drehmomentübertragungsverbindung, insbesondere bei starker reibmäßiger Belastung der reibend miteinander in Wechselwirkung tretenden Oberflächenbereiche der Lamellen 24, 32, die erzeugte Reibwärme abführen zu können, wird die angesprochene Fluidaustauschströmung aufrecht erhalten, wobei beispielsweise das Fluid über den Raumbereich 54 eingeleitet und über den Raumbereich 52 abgezogen wird. Insbesondere bei kurzzeitigen starken Belastungen, wie beispielsweise einem starken Beschleunigen im Anfahrzustand oder beim Anfahren am Berg, für die Reibungskupplungsanordnung 22 eine verbesserte Kühlwirkung vorzusehen, da die durch Fluidaustausch vorgesehene Kühlwirkung vergleichsweise träge ist, wird gemäß der vorliegenden Erfindung innerhalb der Gehäuseanordnung 12 eine der Fluidaustauschströmung überlagerte Fluidzirkulation aufgebaut. Zu diesem Zwecke sind an dem Schalenteil 14 an der der Reibungskupplungsanordnung 22 zugewandten Innenoberfläche 68 derselben mehrere Förderschaufeln 70 in Umfangsrichtung aufeinander folgend angeordnet. Dieses Schalenteil 14 bildet somit mit diesen Schaufeln 70 letztendlich ein allgemein mit 72 bezeichnetes Pumpenrad. Mit der Abtriebswelle 40 ist ein weiteres Schaufelrad, nämlich ein allgemein mit 74 bezeichnetes Turbinenrad fest verbunden. Dieses Turbinenrad 74 weist einen radial äußeren Turbinenradbereich 76 und einen radial inneren Turbinenradbereich 78 auf. Jeder dieser Turbinenradbereiche weist einen ringartigen Schalenabschnitt 80 bzw. 82 auf, welche wiederum jeweilige Förderschaufeln bzw. Förderschaufelabschnitte 84 bzw. 86 tragen. Auch dieses Turbinenrad 74 bzw. die jeweiligen Schalenabschnitte 80, 82 derselben sind im Wesentlichen mit topfartiger Struktur ausgebildet und an ihrer dem Pumpenrad 72 zugewandten Seite zu diesem Pumpenrad 72 hin offen.

Der radial äußere Turbinenradbereich 76 ist über einen ringartigen Träger 88 mit dem mit der Abtriebswelle 40 zur gemeinsamen Drehung gekoppelten Kopplungselement 36 verbunden. Der radial innere Turbinenradbereich 78 bzw. der Schalenabschnitt 82 desselben ist direkt an das Kopplungselement 36 angebunden.

Man erkennt in Fig. 1 des Weiteren, dass die beiden Turbinenradbereiche 76, 78 radial außerhalb bzw. radial innerhalb der Reibungskupplungsanordnung 22 angeordnet sind und im Wesentlichen den gesamten axialen Erstreckungsbereich derselben abdecken. Das Funktionsprinzip der erfindungsgemäßen Kupplungsanordnung 10, welche also eine Reibungskupplungsanordnung 22 und letztendlich auch eine Fluidkupplungsanordnung 90, im Wesentlichen umfassend das Pumpenrad 72 und das Turbinenrad 74, umfasst, wird im Folgenden beschrieben.

Soll über diese Kupplungsanordnung 10 ein Drehmoment übertragen werden, so wird, wie vorangehend bereits beschrieben, in den zweiten Raumbereich 48 in der Gehäuseanordnung 12 unter Druck stehendes Fluid eingeleitet. Dabei presst der Kupplungskolben 44 gegen die Lamellen 24, 32, welche unter Verringerung des zunächst noch vorhandenen Schlupfs in gegenseitige Reibwechselwirkung gebracht werden. In diesem Zustand besteht also zwischen der Gehäuseanordnung 12 und der Abtriebswelle 40 eine zum Teil erhebliche Drehzahldifferenz. Diese Drehzahldifferenz existiert dann auch zwischen dem Pumpenrad 72 und dem Turbinenrad 74. Infolgedessen fördert das Pumpenrad 72 im ersten Raumbereich 46 in der Gehäuseanordnung 12 enthaltenes Fluid nach radial außen, wo es durch die gekrümmte Konfiguration des Schalenteils 14 axial umgelenkt wird und auf den äußeren Turbinenradbereich 76 zu strömt. Dieser Bereich 76 fördert das Fluid weiter, lenkt den Strömungsweg weiter um nach radial innen und fördert es letztendlich auf das Kopplungselement 26 zu. Dieses weist, wie in der Fig. 1 erkennbar, eine Mehrzahl von Durchtrittsöffnungen 92 auf, so dass das Fluid nunmehr von radial außen an die reibend miteinander in Wechselwirkung stehenden bzw. tretenden Lamellen 24 bzw. 32 heranströmen kann. Um das Umströmen bzw. Durchströmen der Reibungskupplungsanordnung 22 weiter zu erleichtern bzw. zu verbessern, können beispielsweise in den Reibbelägen 34 Belagsnuten vorgesehen sein, also in den Oberflächenbereichen der Reibbeläge 34 vorgesehene nutartige Einsenkungen, welche auch bei hergestellter reibmäßiger Anlage den Fluiddurchtritt von radial außen nach radial innen ermöglichen. Das entlang dieser Belagsnuten strömende Fluid strömt dann weiter nach radial innen in Richtung auf den im Wesentlichen axial sich erstreckenden Abschnitt des Kopplungselements 36 zu. Dieser Abschnitt umfasst eine Mehrzahl von Kopplungsvorsprüngen zur Drehkopplung mit den Innenlamellen 32, weist jedoch ebenso eine Mehrzahl von Aussparungen 94 auf, welche den Fluiddurchtritt nach radial innen zulassen. Dieses Fluid strömt dann weiter auf den radial inneren Turbinenradbereich 78 zu und wird durch diesen axial abgelenkt und auf den radial inneren Bereich des Pumpenrads 72 bzw. der Förderschaufeln 70 desselben zu gelenkt. Um dies zu ermöglichen, ist in dem im Wesentlichen radial sich erstreckenden Abschnitt des Kopplungselements 36 ebenfalls eine Mehrzahl von Durchtrittsöffnungen 96 vorgesehen. Es sei hier darauf hingewiesen, dass selbstverständlich das Kopplungselement 36 derart zu dimensionieren ist, dass es das maximal zu übertragende Drehmoment noch ohne der Gefahr einer Beschädigung übertragen kann, dass ansonsten jedoch die vorgesehenen Durchtrittsbereiche 94, 96 die in der Gehäuseanordnung bei Drehzahldifferenz sich entwickelnde und vorangehend beschriebene Fluidzirkulation so wenig als möglich behindern.

Durch die gemäß der vorliegenden Erfindung zusätzlich zu der Fluidaustauschströmung vorhandene in der Gehäuseanordnung 12 zirkulierende Fluidzirkulation wird erreicht, dass das im ersten Raumbereich 46 vorhandene Arbeitsfluid, dessen Austausch nur vergleichsweise langsam erfolgen kann, die Reibungskupplungsanordnung 20 insbesondere in einem Zustand, in welchem ein vergleichsweise großer Schlupf in dieser vorhanden ist, wiederholt umströmt. Es wird dabei die Wärmespeicherkapazität dieses Fluids genutzt, welches nach dem aus dem Stand der Technik bekannten einmaligen Umströmen der Reibungskupplungsanordnung 22 noch nicht die Grenzen seiner Wärmeaufnahmefähigkeit erreicht hat. Diese zusätzliche Fluidzirkulation ist vor allem vorteilhaft bei kurzzeitig auftretenden sehr großen Belastungen, da dann in dem Fluid, das in die Gehäuseanordnung 12 eingespeist und von dieser auch wieder abgezogen wird, deutlich mehr Wärme gespeichert und aus dem Bereich der Reibungskupplungsanordnung 22 abgeführt werden kann, als in dem Falle, in welchem das Fluid nach dem Einspeisen in die Gehäuseanordnung nur ein einziges mal entlang der Reibungskupplungsanordnung strömt und dann wieder die Gehäuseanordnung verlässt. Durch die erfindungsgemäße Ausgestaltung mit einem Dreileitungssystem kann der Austausch des in der Gehäuseanordnung 12 vorhandenen Fluids unabhängig von dem zum Einrücken der Reibungskupplungsanordnung 22 erforderlichen Fluiddruck vollzogen werden, wobei hier die dargestellten und beschriebenen Ausgestaltungsformen mit den drei koaxial zueinander liegenden Wellen 20, 52, 40 einen sehr effektiven und einfach herzustellenden Aufbau mit sich bringt. Wie bereits angesprochen, ist es vorteilhaft, in den beiden Kopplungselementen 26 und 36 die die Fluidzirkulation zulassenden Durchtrittsöffnungen so groß als möglich zu gestalten, um den Durchflusswiderstand zu minimieren, wobei selbstverständlich auf die erforderliche mechanische Stabilität geachtet werden muss. Auch die Geometrie und die Anzahl der in den Reibbelägen 34 vorgesehenen Belagsnuten sollten so gewählt werden, dass zum einen das gewünschte Drehmoment übertragen werden kann, dass zum anderen jedoch auch hier der Strömungswiderstand so gering als möglich ist bzw. auch das durchströmte Volumen so groß als möglich ist.

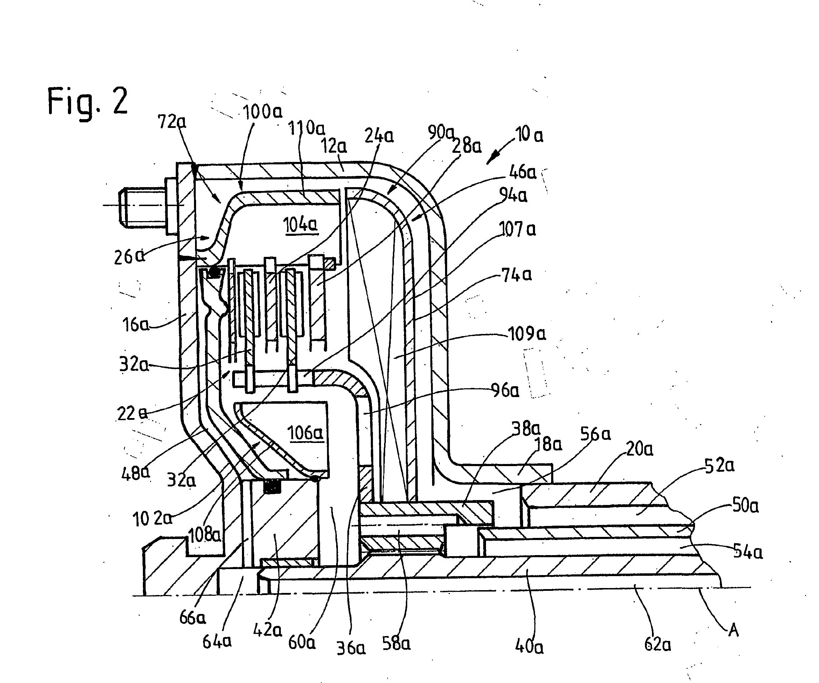

In Fig. 2 ist eine abgewandelte Ausgestaltungsart der erfindungsgemäßen Kupplungsanordnung dargestellt. Komponenten, welche vorangehend beschriebenen Komponenten hinsichtlich Aufbau bzw. Funktion entsprechen, sind mit dem gleichen Bezugszeichen unter Hinzufügung des Anhangs "a" bezeichnet. Im Folgenden wird lediglich auf die zur Ausführungsform gemäß Fig. 1 bestehenden erfindungsrelevanten Unterschiede eingegangen.

Bei der in Fig. 2 dargestellten Kupplungsanordnung 10a ist nunmehr das mit der Gehäuseanordnung 12a zur gemeinsamen Drehung gekoppelte Pumpenrad 72a mit einem radial äußeren Pumpenradbereich 100a und einem radial inneren Pumpenradbereich 102a ausgebildet, die jeweilige Förderschaufelabschnitte 104a bzw. 106a tragen. Auch dieses zwei radial gestaffelte Bereiche 100a, 102a aufweisende Pumpenrad 72a ist an seiner dem nunmehr mit der Abtriebswelle 40 über die Abtriebsnabe 38a zur gemeinsamen Drehung verbundenen Turbinenrad 74a zugewandten Seite axial offen. Das Turbinenrad 74a weist eine radial durchgehende und im äußeren Bereich axial abgekrümmte Schale 107a auf, an deren dem Pumpenrad 72a zugewandten Seite die Förderschaufeln 109a vorgesehen sind. Die Schale 107a ist in ihrem radial inneren Bereich dann an die Abtriebsnabe 38a beispielsweise durch Anschweißung angebunden. Man erkennt ferner, dass die Schaufeln 109a mit ihrer axial freien Kante sich im radial inneren Bereich sehr nahe an dem Kopplungselement 36a erstrecken, um hier eine möglichst gute Fördereffizienz zu erlangen. Hier wird nun eine bezüglich der vorangehend beschriebenen Ausgestaltungsform umgekehrte Zirkulationsrichtung erhalten, d.h. die Reibungskupplungsanordnung 22a wird von radial innen nach radial außen durchströmt. Auch hier sind die Innenlamellen 32a wieder über das Kopplungselement 36a, das die Durchtrittsöffnungen oder Durchtrittsbereiche 94a und 96a aufweist, drehfest and die Abtriebsnabe 38a und somit die Abtriebswelle 40a angekoppelt. Der radial innere Pumpenradbereich 102a ist mit seinem Schalenabschnitt 108a an die Gehäusenabe 42a beispielsweise durch Verschweißung angebunden. Der Schalenabschnitt 110a des radial äußeren Pumpenradbereichs 100a ist an den Gehäusedeckel 16a beispielsweise ebenfalls durch Verschweißung angebunden.

Bei der Ausgestaltungsform gemäß Fig. 2 erkennt man des Weiteren, dass die Außenlamellen 24a und auch der Widerlagerring 28a mit ihren radial außen jeweils vorgesehenen Vorsprüngen bzw. Verzahnungen mit den radial inneren Endbereichen der Schaufelabschnitte 104a in Eingriff stehen und somit über diese Schaufelabschnitte 104a und den diese tragenden Schalenabschnitt 110a an die Gehäuseanordnung 12a zur gemeinsamen Drehung angekoppelt sind, gleichwohl jedoch bezüglich der Gehäuseanordnung 12a axial verlagerbar sind. Letztendlich bildet hier also der radial äußere Pumpenradbereich 100a mit seinen Schaufelabschnitten 104a das die Außenlamellen 24a bzw. den Widerlagerring 28a an die Gehäuseanordnung 12a anbindende Kopplungselement 26a.

Auch bei der in Fig. 2 dargestellten Ausgestaltungsform wird also der über die Raumbereiche 52a und 54a vorgenommenen Fluidaustauschströmung eine Fluidzirkulation im Inneren der Gehäuseanordnung 12a überlagert. Bei dieser Fluidzirkulation strömt das Fluid mit deutlich höherer Strömungsgeschwindigkeit als im Falle der Fluidaustauschströmung, so dass, wie vorangehend mit Bezug auf die Fig. 1 bereits beschrieben, aus dem Bereich der Reibungskupplungsanordnung 22a deutlich verbessert Wärme abgeführt werden kann. Das erwärmte, aus der Gehäuseanordnung 12a bzw. dem ersten Raumbereich 46a derselben abgezogene Fluid kann dann in einem Getriebekühler oder dergleichen gekühlt und darauf folgend wieder in die Gehäuseanordnung 12a eingespeist werden.

Es sei darauf hingewiesen, dass in beiden Ausgestaltungsformen eine Entlastung der Reibungskupplungsanordnung zum einen dadurch erfolgt, dass sie verbessert gekühlt werden kann, insbesondere in dem stark belastenden Zustand großen Schlupfs, zum anderen dadurch entlastet wird, dass zusätzlich über die das Pumpenrad und das Turbinenrad umfassende Fluidkupplungsanordnung ein Anteil des Drehmoments übertragen werden kann. Der wesentliche Aspekt der Fluidkupplungsanordnung bzw. der verschiedenen Schaufel- oder Förderräder derselben ist jedoch die Kühlung bzw. die verbesserte Kühlung der Reibungskupplungsanordnung durch Erzeugung der Fluidzirkulation in der Gehäuseanordnung. Wie bereits eingangs erwähnt, ist dieser Fluidzirkulation die Fluidaustauschströmung überlagert, so dass letztendlich ein Teil des zirkulierenden Fluids ständig ersetzt wird durch neu in die Gehäuseanordnung einströmendes Fluid.

Bei beiden Ausgestaltungsformen sorgt die in den Reibbelägen vorgesehene Belagsnutung für eine verbesserte Umströmung bzw. Durchströmung der Reibungskupplungsanordnung, wobei hier beispielsweise durch entsprechend dicke Ausgestaltung der Reibbeläge bzw. entsprechend tiefe Ausgestaltung der nutartigen Fluiddurchtrittskanäle für die erforderliche Minimierung des Strömungswiderstandes gesorgt werden kann.

Es sei noch darauf hingewiesen, dass selbstverständlich insbesondere im Bereich der Reibungskupplungsanordnung verschiedenste Konfigurationen gewählt werden können, die beispielsweise mehr oder weniger als die dargestellten Lamellen aufweisen können. Von Bedeutung ist, dass gemäß den Prinzipien der vorliegenden Erfindung die Reibungskupplungsanordnung bzw. die reibend wirksamen Bereiche derselben zumindest zum Teil in einem Bereich liegen, der von der in der Gehäuseanordnung aufgebauten Fluidzirkulation erfasst und somit durchströmt wird.

## Patentansprüche

1. Kupplungsanordnung, insbesondere für ein Kraftfahrzeug, umfassend:
- eine mit Fluid gefüllte oder füllbare Gehäuseanordnung (12; 12a),
- in der Gehäuseanordnung (12; 12a) eine erste Reibflächenanordnung (24; 24a) und eine zweite Reibflächenanordnung (32; 32a), welche zur Herstellung einer Reibwechselwirkung in Anlage aneinander bringbar sind, wobei in der Gehäuseanordnung (12; 12a) eine Fluidströmung zur Kühlung der Reibflächenanordnungen (24, 32; 24a, 32a) erzeugbar ist, wobei
die erste Reibflächenanordnung (24; 24a) mit der Gehäuseanordnung (12; 12a) zur gemeinsamen Drehung gekoppelt ist, und die zweite Reibflächenanordnung (32; 32a) mit einem Abtriebsorgan (40; 40a) zur gemeinsamen Drehung gekoppelt ist,
eine in der Gehäuseanordnung (12; 12a) vorgesehene Fluidzirkulationsanordnung (72, 74; 72a, 74a) zur Erzeugung einer die erste Reibflächenanordnung (24; 24a) und die zweite Reibflächenanordnung (32; 32a) wenigstens bereichsweise umströmenden Fluidzirkulation, wobei die Fluidzirkulationsanordnung (72, 74; 72a, 74a) ein mit der Gehäuseanordnung (12; 12a) drehbares erstes Förderorgan (72; 72a) sowie ein mit dem Abtriebsorgan (40; 40a) drehbares zweites Förderorgan (74; 74a) aufweist, **dadurch gekennzeichnet dass** das erste Förderorgan (72; 72a) ein Pumpenrad einer Fluidkupplungsanordnung (90; 90a) und das zweite Förderorgan (74; 74a) ein Turbinenrad der Fluidkupplungsanordnung (90; 90a) bildet.

2. Kupplungsanordnung nach Anspruch 1,
**dadurch gekennzeichnet, dass** das erste Förderorgan (72; 72a) als eine Drehachse (A) umgebendes ringartiges erstes Schaufelrad (72; 72a) ausgebildet ist und dass das zweite Förderorgan (74; 74a) als die Drehachse (A) umgebendes ringartiges zweites Schaufelrad (72; 72a) ausgebildet ist.

3. Kupplungsanordnung nach Anspruch 2,
**dadurch gekennzeichnet, dass** jedes der Schaufelräder (72, 74; 72a, 74a) eine eine Mehrzahl von in Umfangsrichtung aufeinander folgenden Förderschaufeln (70, 84, 86; 104a, 106a, 109a) tragende und zum jeweils anderen Schaufelrad (72, 74; 72a, 74a) offene Schaufelradschale (14, 80, 82; 108a, 110a, 107a) umfasst.

4. Kupplungsanordnung nach Anspruch 2 oder 3,
**dadurch gekennzeichnet, dass** das erste Schaufelrad (72a) oder/und das zweite Schaufelrad (74) einen radial äußeren Schaufelradbereich (76; 100a) und einen radial inneren Schaufelradbereich (78; 102a) aufweist und dass die erste Reibflächenanordnung (24; 24a) und die zweite Reibflächenanordnung (32; 32a) wenigstens teilweise in einem Bereich radial zwischen dem radial äußeren Schaufelradbereich (76; 100a) und dem radial inneren Schaufelradbereich (78; 102a) angeordnet sind.

5. Kupplungsanordnung nach einem der Ansprüche 1 bis 4,
**dadurch gekennzeichnet, dass** jede Reibflächenanordnung (24a, 32a) wenigstens ein Reiborgan aufweist und dass das wenigstens eine Reiborgan der ersten Reibflächenanordnung (24a) vermittels des ersten Förderorgans (72a) mit der Gehäuseanordnung (12a) zur gemeinsamen Drehung gekoppelt ist oder/und dass das wenigstens eine Reiborgan der zweiten Reibflächenanordnung vermittels des zweiten Förderorgans mit dem Abtriebsorgan zur gemeinsamen Drehung gekoppelt ist.

6. Kupplungsanordnung nach Anspruch 3 und Anspruch 5,
**dadurch gekennzeichnet, dass** das wenigstens eine Reiborgan der ersten Reibflächenanordnung (24a) oder/und dass wenigstens eine Reiborgan der zweiten Reibflächenanordnung mit wenigstens einem Teil der Förderschaufeln (104a) des ersten Förderorgans (72a) bzw. des zweiten Förderorgans zur gemeinsamen Drehung gekoppelt ist.

## Claims

1. Clutch arrangement, in particular for a motor vehicle, comprising:
- a housing arrangement (12; 12a) which is or can be filled with fluid,
- in the housing arrangement (12; 12a), a first friction surface arrangement (24; 24a) and a second friction surface arrangement (32; 32a) which can be placed in contact with one another to produce frictional interaction, wherein a fluid flow for cooling the friction surface arrangements (24, 32; 24a, 32a) can be generated in the housing arrangement (12; 12a), wherein
the first friction surface arrangement (24; 24a) is coupled in a rotationally conjoint manner to the housing arrangement (12; 12a), and the second friction surface arrangement (32; 32a) is coupled in a rotationally conjoint manner to a drive output element (40; 40a),
a fluid circulation arrangement (72, 74; 72a, 74a), which is provided in the housing arrangement (12; 12a), for generating a fluid circulation which flows at least in regions around the first friction surface arrangement (24; 24a) and the second friction surface arrangement (32; 32a), wherein the fluid circulation arrangement (72, 74; 72a, 74a) has a first delivery element (72; 72a) which is rotatable with the housing arrangement (12; 12a) and a second delivery element (74; 74a) which is rotatable with the drive output element (40; 40a), **characterized in that** the first delivery element (72; 72a) forms a pump wheel of a fluid clutch arrangement (90; 90a) and the second delivery element (74; 74a) forms a turbine wheel of the fluid clutch arrangement (90; 90a).

2. Clutch arrangement according to Claim 1,
**characterized in that** the first delivery element (72; 72a) is formed as an annular first blade wheel (72; 72a) which extends around an axis of rotation (A) and **in that** the second delivery element (74; 74a) is formed as an annular second blade wheel (72; 72a) which extends around the axis of rotation (A).

3. Clutch arrangement according to Claim 2,
**characterized in that** each of the blade wheels (72, 74; 72a, 74a) comprises a blade wheel shell (14, 80, 82; 108a, 110a, 107a) which bears a multiplicity of delivery blades (70, 84, 86; 104a, 106a, 109a) arranged in succession in the circumferential direction and which is open in the direction of the other blade wheel (72, 74; 72a, 74a) in each case.

4. Clutch arrangement according to Claim 2 or 3,
**characterized in that** the first blade wheel (72a) and/or the second blade wheel (74) has a radially outer blade wheel region (76; 100a) and a radially inner blade wheel region (78; 102a), and **in that** the first friction surface arrangement (24; 24a) and the second friction surface arrangement (32; 32a) are arranged at least partially in a region radially between the radially outer blade wheel region (76; 100a) and the radially inner blade wheel region (78; 102a) .

5. Clutch arrangement according to one of Claims 1 to 4,
**characterized in that** each friction surface arrangement (24a, 32a) has at least one friction element, and **in that** the at least one friction element of the first friction surface arrangement (24a) is coupled in a rotationally conjoint manner by means of the first delivery element (72a) to the housing arrangement (12a), and/or **in that** the at least one friction element of the second friction surface arrangement is coupled in a rotationally conjoint manner by means of the second delivery element to the drive output element.

6. Clutch arrangement according to Claim 3 and Claim 5,
**characterized in that** the at least one friction element of the first friction surface arrangement (24a) and/or the at least one friction element of the second friction surface arrangement is coupled in a rotationally conjoint manner to at least one part of the delivery blades (104a) of the first delivery element (72a) and of the second delivery element respectively.

## Revendications

1. Agencement d'embrayage, en particulier pour un véhicule automobile, comprenant :
- un agencement de boîtier (12 ; 12a) rempli ou pouvant être rempli de fluide,
- un premier agencement de surface de friction (24 ; 24a) et un deuxième agencement de surface de friction (32 ; 32a) dans l'agencement de boîtier (12 ; 12a), qui peuvent être amenés en appui l'un contre l'autre pour établir une interaction de friction, un écoulement de fluide pouvant être produit dans l'agencement de boîtier (12 ; 12a) pour refroidir les agencements de surfaces de friction (24, 32 ; 24a, 32a),
le premier agencement de surface de friction (24 ; 24a) étant accouplé à l'agencement de boîtier (12 ; 12a) en vue d'une rotation commune, et le deuxième agencement de surface de friction (32 ; 32a) étant accouplé à un organe de prise de force (40 ; 40a) en vue d'une rotation commune,
- un agencement de circulation de fluide (72, 74 ; 72a, 74a) prévu dans l'agencement de boîtier (12 ; 12a) pour produire une circulation de fluide circulant autour du premier agencement de surface de friction (24 ; 24a) et autour du deuxième agencement de surface de friction (32 ; 32a) au moins en partie, l'agencement de circulation de fluide (72, 74 ; 72a, 74a) présentant un premier organe de refoulement (72 ; 72a) pouvant tourner avec l'agencement de boîtier (12 ; 12a) ainsi qu'un deuxième organe de refoulement (74 ; 74a) pouvant tourner avec l'organe de prise de force (40 ; 40a), **caractérisé en ce que**
le premier organe de refoulement (72 ; 72a) forme une roue de pompe d'un agencement d'embrayage fluidique (90 ; 90a) et le deuxième organe de refoulement (74 ; 74a) forme une roue de turbine de l'agencement d'embrayage fluidique (90 ; 90a) .

2. Agencement d'embrayage selon la revendication 1,
**caractérisé en ce que** le premier organe de refoulement (72 ; 72a) est réalisé sous forme de première roue à aube (72 ; 72a) de forme annulaire entourant un axe de rotation (A) et **en ce que** le deuxième organe de refoulement (74 ; 74a) est réalisé sous forme de deuxième roue à aube (72 ; 72a) de forme annulaire entourant l'axe de rotation (A).

3. Agencement d'embrayage selon la revendication 2,
**caractérisé en ce que** chacune des roues à aube (72, 74 ; 72a, 74a) comprend une coquille de roue à aube (14, 80, 82 ; 108a, 110a, 107a) portant une pluralité d'aubes de refoulement (70, 84, 86 ; 104a, 106a, 109a) successives dans la direction périphérique et ouverte vers l'autre roue à aube respective (72, 74 ; 72a, 74a).

4. Agencement d'embrayage selon la revendication 2 ou 3,
**caractérisé en ce que** la première roue à aube (72a) et/ou la deuxième roue à aube (74) présentent une région de roue à aube radialement extérieure (76 ; 100a) et une région de roue à aube (78 ; 102a) radialement intérieure et **en ce que** le premier agencement de surface de friction (24 ; 24a) et le deuxième agencement de surface de friction (32 ; 32a) sont disposés au moins en partie dans une région radialement entre la région de roue à aube radialement extérieure (76 ; 100a) et la région de roue à aube radialement intérieure (78 ; 102a) .

5. Agencement d'embrayage selon l'une quelconque des revendications 1 à 4,
**caractérisé en ce que** chaque agencement de surface de friction (24a, 32a) présente au moins un organe de friction et **en ce que** l'au moins un organe de friction du premier agencement de surface de friction (24a) est accouplé à l'agencement de boîtier (12a) au moyen du premier organe de refoulement (72a) en vue d'une rotation en commun, et/ou **en ce que** l'au moins un organe de friction du deuxième agencement de surface de friction est accouplé à l'organe de prise de force au moyen du deuxième organe de refoulement en vue d'une rotation en commun.

6. Agencement d'embrayage selon la revendication 3 et la revendication 5, **caractérisé en ce que** l'au moins un organe de friction du premier agencement de surface de friction (24a) et/ou **en ce que** l'au moins un organe de friction du deuxième agencement de surface de friction sont accouplés à au moins une partie des aubes de refoulement (104a) du premier organe de refoulement (72a) ou du deuxième organe de refoulement en vue d'une rotation en commun.
